# EUROPEAN PATENT SPECIFICATION

(11) **EP 4 076 989 B1**
(45) Date of publication and mention of the grant of the patent: **20.11.2024**
(21) Application number: 20825267.6
(22) Date of filing: 17.12.2020
(51) Int. Cl.: B60C 9/00, B60C 9/18, B60C 9/20, B60C 9/22

(54) **TYRE WITH BELT PACKAGE REINFORCEMENT ELEMENT**
REIFEN MIT GÜRTELPAKETVERSTÄRKUNGSELEMENT
PNEU DOTÉ D'UN ÉLÉMENT DE RENFORCEMENT DE BLOC CEINTURE

(30) Priority: 18.12.2019 IT 201900024442
(43) Date of publication of application: 26.10.2022
(73) Proprietor: Bridgestone Europe NV/SA, 1930 Zaventem (BE)
(72) Inventor: COLLETTI, Marco, 00128 Roma (IT); SPIRI, Luca, 00128 Roma (IT)
(74) Representative: Marchetti, Alessio
(86) International application number: PCT/IB2020/062094
(87) International publication number: WO 2021/124186

(56) References cited:
- JP-A- 2014 162 309
- US-A- 3 841 376

## Description

The invention relates to a tyre comprising a fabric ply designed to support the belt package.

As a person skilled in the art knows, tyres comprise a belt package, which generally consists of steel belts and of a cap ply. Steel belts basically create a steel net, which basically forms the reinforcement of the wheels.

JP2014162309 A discloses a pneumatic tire capable of improving puncture resistance. The known pneumatic tire includes: a carcass extending from a tread portion to a bead core of a bead portion through a side wall portion; a belt layer arranged on an outer side in a tire radial direction of the carcass; and a reinforcing layer arranged on an outer side in the tire radial direction of the belt layer. The reinforcing layer includes a plurality of reinforcing filaments made of organic fibers, and the reinforcing filaments include a plurality of first filaments arranged so as to incline to one side in a tire circumferential direction, and a plurality of second filaments inclined to the other side in the tire circumferential direction. The reinforcing layer has a plurality of intersecting portions at which the first filaments and the second filaments intersect each other.

The aim of steel belts in radial tyres is that of stabilizing the carcass in the area in which the tyre interacts with the road, so as to correctly and effectively transmit the steering commands from the steering wheel to the road. Anyone can immediately understand that a damage to the steel belts can cause problems to the normal operation of the tyre.

For a long time ago, in the tire field the need has been felt for tires with the technical characteristics able to guarantee a greater durability. As it is known to a skilled person of the field, one of the elements that most guarantees the durability of the tires is the resistance of the belt package.

In order to improve the resistance of the belt package, manufacturers usually add heavy reinforcement elements and/or change the materials thereof. Such a solution, although it is able to guarantee greater resistance, leads however to a drawback concerning a weight increase, with a consequent worsening of the rolling resistance and a tyre cost increase.

In order to verify the resistance of the belt package, a test known as "plunger test" is used. This test basically measures the resistance of the tire belt package to the impacts that the tyre undergoes during its operation. In particular, this test involves the use of a plunger with a rounded tip, which forces the central area of the tread of an inflated tyre. By so doing, one can measure the energy needed to penetrate the carcass.

Therefore, there is a need for a solution capable of ensuring an improvement in terms of resistance of the belt package, without for this reason being affected by those drawbacks that are typical of the prior art and concern a tyre weight and cost increase.

The subject-matter of the invention is a tyre comprising a carcass, a belt package and a tread; said tyre being characterized in that it comprises at least a reinforcement net made of a weaved textile material having a number of meshes per linear inch ranging from 8 to 16, and wherein the threads are oriented between 25° and 65° relative to a longitudinal direction of the tyre; said reinforcement net being arranged at least in the area of a centre of the tread and positioned inside the belt package or between the belt package and the tread; said weaved textile material having an elongation at break equal to or greater than 10%; said reinforcement net having a shorter transverse extension than the one of the belt package.

"Meshes" are units of measurement corresponding to the number of meshes per linear inch.

In the present application "weaved textile material" means a material in which the threads are intertwined without constraints such as knots or the like. That is, each thread is free to slide over the others.

This weaved textile material must be able to easily expand itself under application of a perpendicular load (an external input like just for example a stone on the road) such spreading the external load input on wider number of below steelcord. If the material comprised knots between threads (or even similar shape that block the relative movement among threads) this would be reflected into a concentration of stress on the singular knot and, accordingly, on a single point of the belt package below, with opposite effect of the purpose of the invention.

In case the reinforcement net has a number of meshes smaller than the one indicated above, it loses its efficiency in terms of increase of the energy needed to penetrate the belt package. Indeed, should the number of meshes smaller than the range indicated above, the reinforcement net cannot ensure an effective distribution of the forces on the belt package. While, in case the reinforcement net has a number of meshes greater than the range indicated above, no further increase of the energy needed to penetrate the belt package is obtainable and, at the same time, there are disadvantages in terms of productivity, weight, cost and irregular wear of the tread. The latter disadvantage, as may be immediate to a skilled man of the art, derives from the excessive stiffness of the reinforcement net.

Preferably, the reinforcement net has a number of meshes per linear inch ranging from 12 to 16.

Furthermore, the orientation of the threads of the reinforcement net, as defined above, ensures that, during the tyre vulcanization step, the reinforcement net can stretch without being subjected to a harmful tensioning.

Furthermore, it has been experimentally proved that when the weaved textile material has an elongation at break smaller than 10%, the reinforcement net has not enough elasticity needed to spread plunger load on wider area.

The reinforcement net is preferably made of a weaved textile material with an elongation at break equal to or greater than 15%, and more preferably equal to or greater than 20%.

The reinforcement net is preferably made of Nylon.

Preferably, the belt package comprises at least a pair of steel belts and the reinforcement net is positioned on the steel belt closest to the tread. Alternatively, the belt package comprises also a cap ply and the reinforcement net is preferably positioned between the steel belt closest to the tread and the cap ply.

Said reinforcement net preferably is covered with an adhesive substance to guarantee adhesion between the reinforcement net and a surrounding rubber.

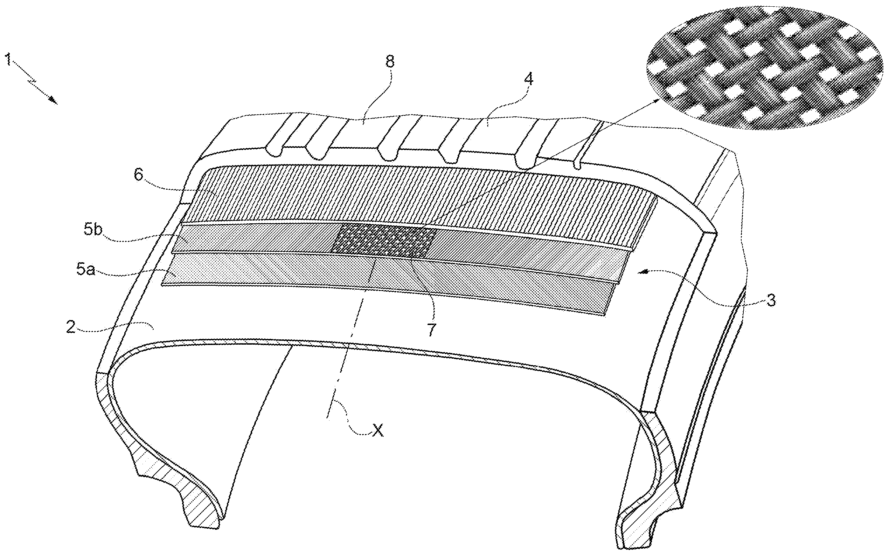

The invention will now be described with reference to the accompanying drawing, which shows, by mere way of explanatory and non-limiting example, an embodiment thereof.

The figure shows a portion of a tyre according to the invention with parts removed for greater clarity.

In the figure, number 1 indicates, as a whole, a tyre comprising a carcass 2, a belt package 3 and a tread 4. In particular, the belt package 3 comprises a pair of steel belts 5a and 5b and a cap ply 6.

The tyre 1 comprises a reinforcement net 7 arranged between the second steel belt 5b and the cap ply 6.

The reinforcement net 7 has a smaller transverse extension than the one of the belt package and is arranged in the area of a central rib 8 of the tread 4.

The reinforcement net 7 is made of Nylon and has threads oriented at 45° relative to a longitudinal axis X of the tyre. Nylon has an elongation at break of 20%.

In particular, the reinforcement net 7 has a number of mesh of 12, a width of 100 mm, a gauge of 0.6 mm and threads of 6.6 Nylon characterized by 940 dtex and EPDM 47.

The reinforcement net before being mounted on the tire was covered with RFL resin as adhesive substance, in order to guarantee the adhesion of the net with surrounding rubber.

The tyre 1 comprising the reinforcement net 7 was subjected to the plunger test according to FMVSS 139 American standard under Extra load tire condition with tire 195/55R16.

For comparison, the same test was performed on a comparison tire, which differs from the tire of the invention solely because it is devoid of the reinforcing net 7.

The plunger test showed for the tire of the present invention an energy higher than that found for the comparison tire.

In particular, indexing the energy value obtained with the comparison tyre (without reinforcement net) to 100, the energy value obtained with the tyre of the invention amounts to 123.

The energy increase obtained with the tyre of the invention derives from the resistance produced by the reinforcement net per se only to a minimum extent (14% of the total improvement from the comparison tire), whereas, to a much greater extent, it derives from the effect, generated by the reinforcement net itself, of dissipation of the load on the steel belts.

Obviously, the above dissipation is possible only if the weaved textile material has an elongation at break such as to be flexible enough to spread external input on wider steel cord area. In fact, if the weaved textile material breaks (low elongation break) it will not be able to have enough spreading effect.

In order to demonstrate that the elongation at break of weaved textile materials plays an essential role for the effectiveness of the invention, the inventors made a comparison between reinforcement nets made of Nylon and reinforcement nets made of a Nylon/Aramid hybrid.

The elongation at break of Nylon/Aramid hybrid is 4.5%.

The comparison has been carried out by FEM Simulation using the following conditions:
- Net strip width:25 mm
- Net strip gauge:0.6 mm
- Net angle: 2strip × 45°
- Fabric type:
   Nylon(1400/2) at different EPDM: 100,47,13 with E (Modulus)=3.544×10⁵ psi
   Hybrid (Aramid: 1670/2 + Nylon: 940/1) at different EPDM: 100,47,13 with E (Modulus) = 2.5×10⁶ psi
- Tire size: 195/65R15
- Rubber skim modulus: E(modulus) = 8.261×10² psi, Poisson ratio:0.4950
- Rubber Tread Modulus: E(modulus) = 8.657×10² psi, Poisson ratio:0.4950

In Table I plunger simulation data (FEM simulation) are shown.

The results of table I are indexed to the tyre without reinforcement net.

**Table I**

| Tyre without reinforcement net | 100% |
|---|---|
| Tyre with Nylon reinforcement net (3 Mesh) | 109.8% |
| Tyre with Nylon reinforcement net (12 Mesh) | 112.6% |
| Tyre with Hybrid reinforcement net (3 Mesh) | 107.6% |
| Tyre with Hybrid reinforcement net (12 Mesh) | 110.5% |

Owing to the above, it is evident that the solution suggested by this invention can ensure an improvement of the tyre in terms of higher energy values in the plunger test.

This result is necessarily associated with a greater resistance of the belt package of the tyre, which automatically translates into a longer life thereof.

## Claims

1. A tyre (1) comprising a carcass (2), a belt package (3), a tread (4) and at least a reinforcement net (7) made of a weaved textile material wherein the threads are oriented between 25° and 65° relative to a longitudinal axis (X) of the tyre; said reinforcement net (7) having a shorter transverse extension than the one of the belt package, being arranged at least in the area of a centre of the tread (4) and being positioned inside the belt package (3) or between the belt package (3) and the tread (4); said tyre being **characterized in that** said weaved textile material has an elongation at break equal to or greater than 10% and a number of meshes per linear inch ranging from 8 to 16.

2. A tyre according to claim 1, **characterized in that** the reinforcement net (7) is made of a weaved textile material with an elongation at break equal to or greater than 15%.

3. A tyre according to claim 1 or 2, **characterized in that** the reinforcement net (7) is made of a weaved textile material with an elongation at break equal to or greater than 20%.

4. A tyre according to one of the preceding claims, **characterized in that** the reinforcement net is made of Nylon.

5. A tyre according to one of the preceding claims, **characterized in that** the belt package (3) comprises at least a pair of steel belts (5a and 5b) and the reinforcement net (7) is positioned on the steel belt (5b) closest to the tread (4).

6. A tyre according to one of the claims 1 - 4, **characterized in that** the belt package (3) comprises at least a pair of steel belts (5a and 5b) and a cap ply (6) and the reinforcement net is positioned between the steel belt (5b) closest to the tread (4) and the cap ply (6) .

7. A tyre according to one of the preceding claims, **characterized in that** said reinforcement net is covered with an adhesive substance able to guarantee adhesion between the reinforcement net and a surrounding rubber.

## Patentansprüche

1. Reifen (1), umfassend eine Karkasse (2), einen Gürtelverband (3), eine Lauffläche (4) und mindestens ein Verstärkungsnetz (7), das aus einem gewebten Textilmaterial hergestellt ist, wobei die Laufflächen zwischen 25° und 65° relativ zu einer Längsachse (X) des Reifens ausgerichtet sind; wobei das Verstärkungsnetz (7) eine kürzere Quererstreckung als die eine des Gürtelpakets aufweist, das mindestens in dem Bereich einer Mitte der Lauffläche (4) angeordnet ist und innerhalb des Gürtelpakets (3) oder zwischen dem Gürtelpaket (3) und der Lauffläche (4) positioniert ist; wobei der Reifen **dadurch gekennzeichnet ist, dass** das gewebte Textilmaterial eine Bruchdehnung, die gleich oder größer als 10 % ist, und eine Anzahl von Maschen pro linearem Inch in einem Bereich von 8 bis 16 aufweist.

2. Reifen nach Anspruch 1, **dadurch gekennzeichnet, dass** das Verstärkungsnetz (7) aus einem gewebten Textilmaterial mit einer Bruchdehnung hergestellt ist, die gleich oder größer als 15 % ist.

3. Reifen nach Anspruch 1 oder 2, **dadurch gekennzeichnet, dass** das Verstärkungsnetz (7) aus einem gewebten Textilmaterial mit einer Bruchdehnung hergestellt ist, die gleich oder größer als 20 % ist.

4. Reifen nach einem der vorstehenden Ansprüche,
**dadurch gekennzeichnet, dass** das Verstärkungsnetz aus Nylon hergestellt ist.

5. Reifen nach einem der vorstehenden Ansprüche,
**dadurch gekennzeichnet, dass** der Gürtelverband (3) mindestens ein Paar Stahlgürtel (5a und 5b) umfasst und das Verstärkungsnetz (7) auf dem Stahlgürtel (5b) positioniert ist, der der Lauffläche (4) am nächsten liegt.

6. Reifen nach einem der Ansprüche 1 bis 4,
**dadurch gekennzeichnet, dass** der Gürtelverband (3) mindestens ein Paar Stahlgürtel (5a und 5b) und eine Decklage (6) umfasst und das Verstärkungsnetz zwischen dem Stahlgürtel (5b) positioniert ist, der der Lauffläche (4) und der Decklage (6) am nächsten liegt.

7. Reifen nach einem der vorstehenden Ansprüche,
**dadurch gekennzeichnet, dass** das Verstärkungsnetz mit einer Klebstoffsubstanz überzogen ist, die in der Lage ist, eine Klebfestigkeit zwischen dem Verstärkungsnetz und einem umgebenden Kautschuk zu gewährleisten.

## Revendications

1. Pneumatique (1) comprenant une carcasse (2), un paquet de ceintures (3), une bande de roulement (4) et au moins un filet de renforcement (7) constitué d'un matériau textile tissé dans lequel les fils sont orientés entre 25° et 65° par rapport à un axe longitudinal (X) du pneumatique ; ledit filet de renforcement (7) ayant une extension transversale plus courte que celle du paquet de ceintures, étant disposé au moins dans la zone d'un centre de la bande de roulement (4) et étant positionné à l'intérieur du paquet de ceintures (3) ou entre le paquet de ceintures (3) et la bande de roulement (4) ; ledit pneumatique étant **caractérisé en ce que** ledit matériau textile tissé présente un allongement à la rupture égal ou supérieur à 10 % et un nombre de mailles par pouce linéaire compris entre 8 et 16.

2. Pneumatique selon la revendication 1, **caractérisé en ce que** le filet de renforcement (7) est constitué d'un matériau textile tissé ayant un allongement à la rupture égal ou supérieur à 15 %.

3. Pneumatique selon la revendication 1 ou 2, **caractérisé en ce que** le filet de renforcement (7) est constitué d'un matériau textile tissé ayant un allongement à la rupture égal ou supérieur à 20 %.

4. Procédé selon l'une des revendications précédentes,
**caractérisé en ce que** le filet de renforcement est constitué de nylon.

5. Pneumatique selon l'une des revendications précédentes,
**caractérisé en ce que** le paquet de ceintures (3) comprend au moins une paire de ceintures en acier (5a et 5b) et que le filet de renforcement (7) est positionné sur la ceinture en acier (5b) la plus proche de la bande de roulement (4).

6. Pneumatique selon l'une des revendications 1 à 4, **caractérisé en ce que** le paquet de ceintures (3) comprend au moins une paire de ceintures en acier (5a et 5b) et une nappe sommet (6) et que le filet de renforcement est positionné entre la ceinture en acier (5b) la plus proche de la bande de roulement (4) et la nappe sommet (6).

7. Pneumatique selon l'une des revendications précédentes,
**caractérisé en ce que** ledit filet de renforcement est recouvert d'une substance adhésive capable de garantir une adhérence entre le filet de renforcement et un caoutchouc environnant.
